Europäisches Patentamt

European Patent Office

Office européen des brevets

(19)

(11) EP 0 708 310 B1

# (12) FASCICULE DE BREVET EUROPEEN

(45) Date de publication et mention
de la délivrance du brevet:
**17.11.1999 Bulletin 1999/46**

(51) Int Cl.⁶: **G01C 23/00**, G05D 1/06

(21) Numéro de dépôt: **95402294.3**

(22) Date de dépôt: **13.10.1995**

(54) **Dispositif optoélectronique d'aide au pilotage d'un aéronef**

Optoelektronische Vorrichtung zur Unterstützung der Führung eines Flugzeuges

Optoelectronic device to aid piloting of an aircraft

(84) Etats contractants désignés:
**BE CH DE ES FR GB IT LI NL SE**

(30) Priorité: **18.10.1994 FR 9412408**

(43) Date de publication de la demande:
**24.04.1996 Bulletin 1996/17**

(73) Titulaire: **THOMSON-CSF SEXTANT
78141 Vélizy Villacoublay (FR)**

(72) Inventeurs:
• **Coirier, Philippe
F-92402 Courbevoie Cedex (FR)**

• **Parus, Roger
F-92402 Courbevoie Cedex (FR)**

(74) Mandataire: **Beylot, Jacques et al
Thomson-CSF Propriété Intellectuelle,
13, Avenue du Président Salvador Allende
94117 Arcueil Cédex (FR)**

(56) Documents cités:
**EP-A- 0 044 777        EP-A- 0 418 558
WO-A-94/04984        FR-A- 2 389 535
FR-A- 2 666 428        US-A- 3 837 603
US-A- 4 368 517**

EP 0 708 310 B1

## Description

La présente invention concerne les dispositifs optoélectroniques d'aide au pilotage d'un aéronef par mauvaise visibilité, en approche finale, au roulage et au décollage.

Les dispositifs optoélectroniques d'aide au pilotage d'un aéronef consistent en des collimateurs ou viseurs tête-haute présentant, devant les yeux du pilote d'un avion ou d'un hélicoptère, des informations graphiques et alphanumériques sous forme de réticules, projetés sur une optique semi-réfléchissante en superposition avec la vue du monde extérieur.

Les performances obtenues à l'aide de ces dispositifs optoélectroniques d'aide au pilotage dépendent directement des caractéristiques des divers réticules présentés au pilote tant pour la capacité de surveillance globale de la situation que pour la précision des manoeuvres effectuées manuellement.

Les réticules habituellement affichés peuvent être classés en différentes familles selon les indications qu'ils donnent :

- éléments du "T basique" de la planche de bord (vitesse, attitude, cap, altitude),
- éléments proches de ceux du "T basique" (nombre de Mach, vitesse verticale (variomètre), radio-altitude),
- éléments liés à la trajectoire (vecteur vitesse, accélération, pente totale),
- éléments de radionavigation de zone (RNAV) permettant de suivre une route grâce à des balises radioélectriques (VOR, ILS, DME),
- éléments complémentaires de contrôle de situation ( consignes explicites (route, cap etc.), écarts par rapport à des consignes (vitesse etc.), indications de modes de fonctionnement, alarmes diverses etc.)

Dans le domaine de l'aviation civile, les collimateurs sont utilisés principalement pour les phases de vol d'atterrissage, de roulage et de décollage par mauvaise visibilité. Ils permettent une réduction des minima opérationnels de visibilité et augmentent la sécurité des opérations grâce à une capacité accrue de surveillance de la situation. Ils apportent en outre une précision accrue de contrôle de la trajectoire en condition de vol à vue.

Les solutions actuellement connues pour l'aide à l'approche, au roulage sur une piste et au décollage par mauvaise visibilité consistent à présenter au pilote, sur un collimateur, un réticule formé d'une image synthétique de piste, calculée rigoureusement en trois dimensions. Cette image synthétique de piste qui se superpose à la piste réelle est construite à partir de la position estimée de l'aéronef, par rapport à la piste réelle, fournie par ses instruments de navigation de bord. Elle est mise à jour au cours des évolutions de l'aéronef à l'aide d'algorithmes exclusifs au sens où ils ne couvrent que la partie en vol ou que la partie au sol de la trajectoire de l'aéronef ce qui induit une discontinuité dans la présentation des informations au pilote lors du toucher des roues ou du décollage.

L'utilisation des collimateurs pour l'aide au pilotage d'un aéronef dans l'état actuel de la technique peut être illustrée par la demande européenne de brevet EP A 0 044 777 (Dassault Aviation et Thomson-CSF et par la demande de brevet français FR A 2 666 428 (Aérospatiale).

La demande européenne de brevet EPA 0 044 777 décrit un dispositif d'assistance au pilotage d'un aéronef avec un collimateur de vol sur lequel sont affichés une fenêtre de guidage de trajectoire et un repère de position de l'avion que le pilote doit amener en coïncidence par des manoeuvres adéquates de l'aéronef pour être certain de suivre une trajectoire correcte lors de l'approche d'une piste d'atterrissage. Accessoirement, le collimateur affiche une image évolutive et réaliste d'une piste d'atterrissage telle qu'elle serait vue par le pilote. L'image de la piste se compose d'un trapèze matérialisant les contours de la piste et d'une ligne médiane en pointillés matérialisant l'axe de la piste. La position d'affichage de cette ligne médiane est déduite principalement de l'écart dit "localizer" et de l'écart dit "glide" fournis par un récepteur ILS de sorte qu'elle correspond sensiblement à la trace, sur le sol, du plan vertical d'émission du faisceau ILS dit "glide" et qu'elle peut différer légèrement de l'axe de la piste. Il en résulte qu'elle fournit au pilote de l'aéronef une indication dont la précision devient insuffisante en fin d'approche, en phase finale d'atterrissage et lors du roulage au sol ainsi que lors d'un décollage.

La demande de brevet français FR-A 2 666 428 décrit un procédé de visualisation, sur un écran à bord d'un avion, de symboles d'aide au pilotage facilitant l'approche d'une piste. Ce procédé consiste à afficher sur l'écran la position de l'avion par rapport à une trajectoire d'approche idéale matérialisée par des segments de tube parallélépipédique et à faire apparaître la piste telle qu'elle doit se présenter au pilote. La représentation de la piste est une représentation en perspective avec un axe de piste et un point de toucher de roue. La manière d'obtenir cette représentation de la piste à partir des paramètres de vol n'est pas détaillée car elle est considérée comme faisant partie de la technique connue. Elle en présente donc les insuffisances qui ont été signalées précédemment.

La présente invention a pour but d'améliorer, l'aide au pilotage, dans des conditions de mauvaise visibilité, en vol, en phase finale d'atterrissage ou, au sol, pendant le roulage sur une piste équipée d'un ILS, grâce à l'affichage sur un collimateur d'un symbole d'axe de piste montrant l'alignement de l'aéronef et son décalage par rapport à l'axe d'alignement radioélectrique du récepteur de contrôle d'alignement axial de l'ILS, sans discontinuité entre les phases au sol et en vol, cela afin d'augmenter le niveau de surveillance de la situation en général et la précision de suivi de la trajectoire en particulier.

Elle a pour objet un dispositif optoélectronique d'aide au pilotage d'un aéronef qui est pourvu d'un collimateur de vol, de récepteurs ILS de contrôle d'alignement axial et de contrôle de pente de descente en approche, et d'instruments de navigation donnant son cap ainsi que sa vitesse et son altitude par rapport au sol, et qui évolue au voisinage d'une piste d'atterrissage ou de décollage équipée d'un ILS. Ce dispositif comporte des moyens d'affichage, sur le collimateur, d'une ligne matérialisant l'axe de piste présenté au pilote en vol comme au sol, sans discontinuité entre les phases en vol d'approche finale au seuil de la piste et, au sol de roulage sur la piste. Il est remarquable en ce qu'il comporte des moyens pour situer l'origine de la ligne matérialisant l'axe de piste sur la ligne d'horizon graduée en échelle de cap, au point représentant la route de consigne coïncidant avec l'orientation de l'axe d'alignement donné par le récepteur d'alignement axial de l'ILS" et des moyens pour orienter la ligne matérialisant l'axe de piste par rapport à la ligne d'horizon selon un angle $\phi$P pris égal en degrés à :

$$\phi P = -\arctan\left(\frac{Y_{ON}}{Z_{ON}}\right) \times \frac{1}{K} - 90°$$

où $Y_{ON}$ et $Z_{ON}$ sont respectivement la position par rapport à l'axe d'alignement du récepteur de contrôle d'alignement axial de l'ILS, en latéral et en vertical, de l'emplacement de l'oeil du pilote regardant au travers du collimateur, et K un coefficient de conversion d'angle de degrés en radians.

La position, en latéral par rapport à l'axe d'alignement du récepteur de contrôle d'alignement axial de l'ILS, de l'oeil du pilote regardant au travers du collimateur est déduite de la relation :

$$Y_{ON} = X_{AL} \times LOCRAD + (X_{LOCAN} - X_{PE}) \times (COURSEL - HDGMG) \times K + Y_{PE}$$

dans laquelle :

- $X_{AL}$ est la distance courante de l'antenne du récepteur de contrôle d'alignement axial de l'ILS à bord de l'aéronef par rapport à l'antenne de l'émetteur de contrôle d'alignement axial de l'ILS situé en bout de piste,
- LOCRAD est l'écart angulaire en radian détecté par le récepteur de contrôle d'alignement axial de l'ILS,
- $X_{LOCAN}$ est la cote longitudinale, dans l'aéronef, de l'antenne du récepteur de contrôle d'alignement axial de l'ILS,
- $X_{PE}$ est la cote longitudinale, dans l'aéronef, de l'emplacement de l'oeil du pilote,
- COURSEL est la route choisie en degrés, c'est à dire l'axe radioélectrique de ILS,
- HDGMG est le cap magnétique en degrés de l'aéronef, et
- $Y_{PE}$ la cote transversale, dans l'aéronef, de l'emplacement de l'oeil du pilote

tandis que la position en vertical de l'emplacement de l'oeil du pilote par rapport à l'axe d'alignement du récepteur de contrôle d'alignement axial de l'ILS est déduite de la relation :

$$Z_{ON} = ALTRA + (X_{PE} - X_{LDG}) \times PITANG \times K + (Z_{PE} - Z_{LDG})$$

dans laquelle :

- ALTRA est la hauteur radiosonde compensée pour donner la hauteur par rapport au sol des roues du train principal d'atterrissage,
- $X_{PE}$ est la cote longitudinale, dans l'aéronef, de l'emplacement de l'oeil du pilote,
- $X_{LDG}$ est la cote longitudinale, dans l'aéronef, du train principal d'atterrissage,
- PITANG est l'angle d'assiette longitudinale de l'aéronef en degrés,
- $Z_{PE}$ est la cote verticale, dans l'aéronef, de l'emplacement de l'oeil du pilote, et
- $Z_{LDG}$ est la cote verticale, dans l'aéronef, des roues du train principal d'atterrissage.

La distance courante de l'antenne du récepteur de contrôle d'alignement axial de l'ILS à bord de l'aéronef par rapport à l'antenne de l'émetteur de contrôle d'alignement axial de l'ILS situé au sol en bout de piste est tirée de la relation :

$$X_{AL} = X_{AL0} + \int_0^t SPDGND \times dt$$

dans laquelle

- SPDGND est la vitesse au sol de l'aéronef, et
- $X_{AL0}$ est la distance initiale entre l'antenne du récepteur de contrôle d'alignement axial de l'ILS à bord de l'aéronef par rapport à l'antenne de l'émetteur de contrôle d'alignement axial de l'ILS situé en bout de piste. Au décollage elle a une valeur forfaitaire - TOGADIST. A l'atterrissage elle est estimée, en supposant que l'aéronef passe à l'instant t=0 au seuil de piste nominal, c'est à dire en étant dans le faisceau de contrôle de pente d'approche de l'ILS avec un écart par rapport à ce faisceau (GSDEV) négligeable, à une hauteur arbitraire voisine de 50 pieds, par la relation :

$$X_{AL0} = -RWYLEN - \frac{(RATHERS + (Z_{GSAN} - Z_{LDG}) + (X_{GSAN} - X_{LDG}) \times PITCH_0 \times K)}{0,05235}$$
$$+ X_{LOCAN} - X_{GSAN}$$

dans laquelle :

- RWYLEN est une longueur forfaitaire de piste à l'atterrissage représentant la distance au sol entre les émetteurs de contrôle de pente en approche et de contrôle d'alignement axial de l'ILS,
- RATHRES est la valeur de seuil de l'indication de hauteur du train d'atterrissage par rapport au sol donnée par la radiosonde pour laquelle on considère que l'aéronef est au seuil de la piste,
- $Z_{GSAN}$ est la cote verticale, dans l'aéronef, de l'antenne du récepteur de contrôle de pente d'approche de l'ILS,
- $X_{GSAN}$ est la cote longitudinale, dans l'aéronef, de l'antenne du récepteur de contrôle de pente d'approche de l'ILS,
- $PITCH_0$ est l'assiette longitudinale de l'aéronef lorsque ce dernier passe au seuil de piste, et
- $X_{LOCAN}$ est la cote longitudinale, dans l'aéronef, de l'antenne du récepteur de contrôle d'alignement axial de l'ILS.

L'axe de piste artificiel ainsi affiché sur le collimateur sert essentiellement, en condition de mauvaise visibilité, pour contrôler la qualité d'une approche automatique ou pour effectuer directement, au palonnier, la tenue d'axe de piste lors des phases de roulage au décollage et à l'atterrissage.

En effet, de par sa position et son orientation valables à l'approche comme au roulage, il restitue, sous une forme très intuitive, les informations nécessaires et suffisantes pour piloter, d'orientation et d'écart de position de l'aéronef par rapport à l'axe d'alignement du récepteur de contrôle d'alignement axial de l'ILS.

D'autres caractéristiques et avantages de l'invention ressortiront de la description ci-après d'un mode de réalisation donné à titre d'exemple. Cette description sera faite en regard du dessin dans lequel :

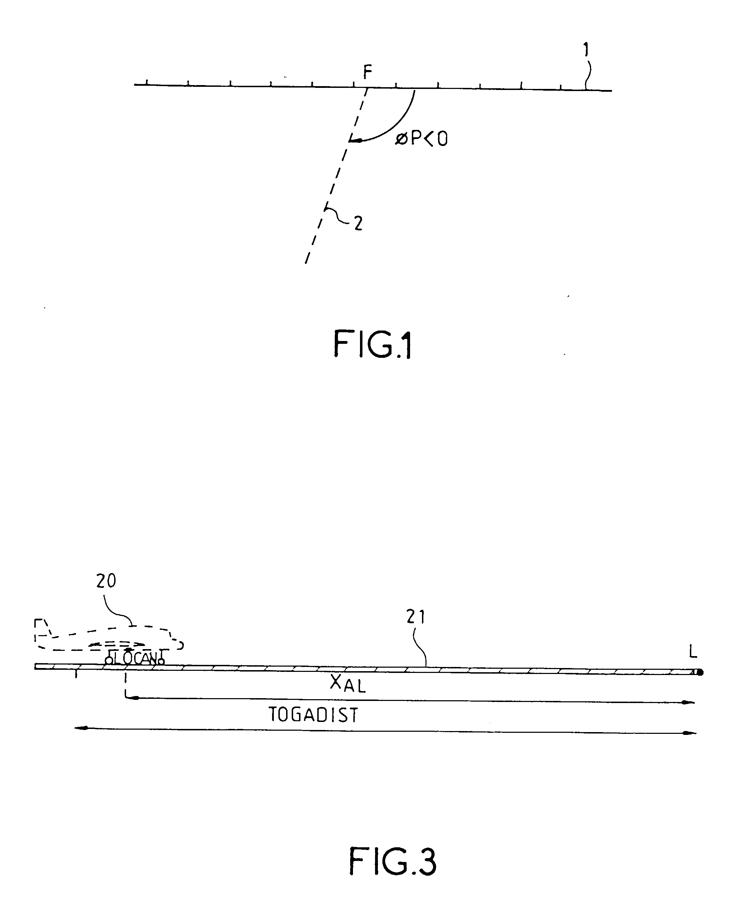

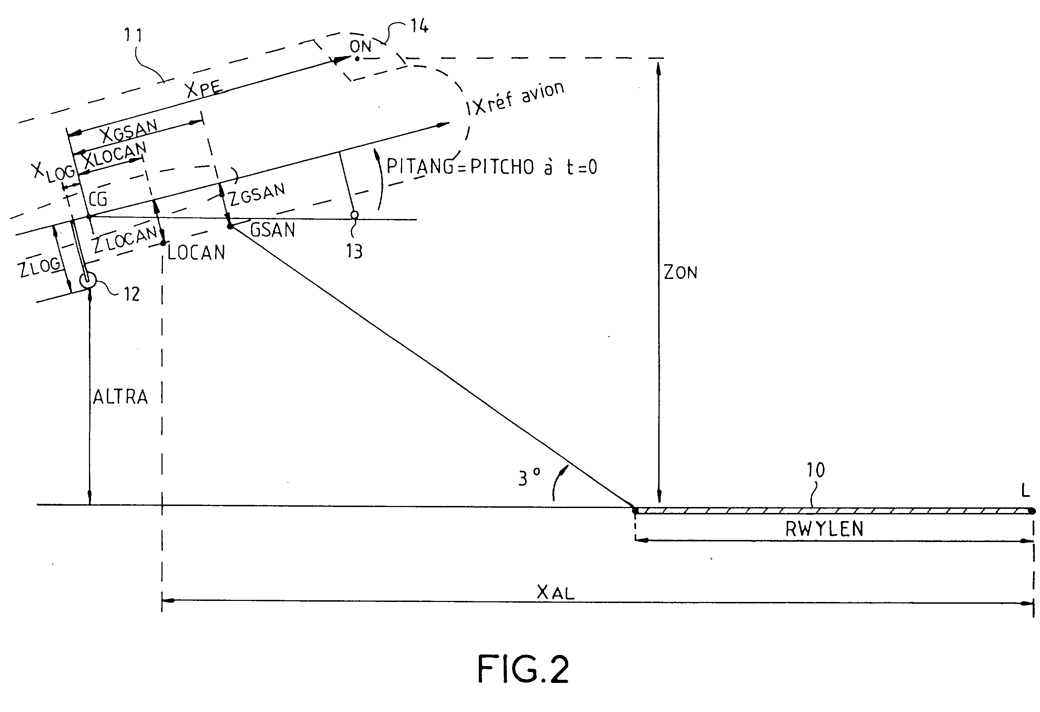

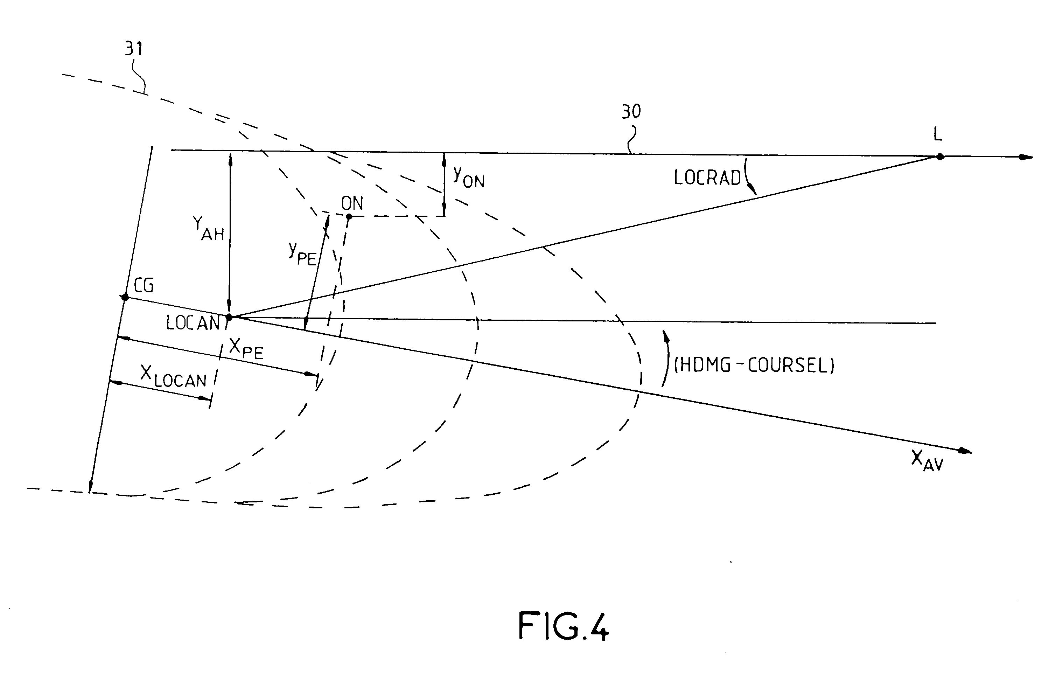

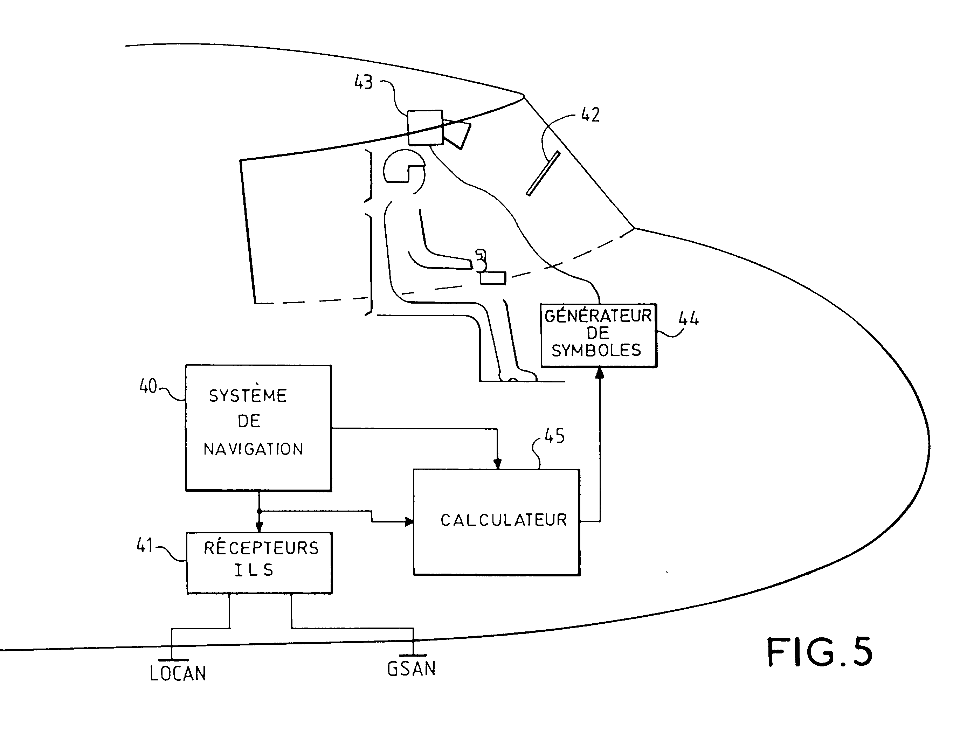

- une figure 1 représente le réticule d'axe de piste affiché par le dispositif selon l'invention sur un collimateur de vol,
- une figure 2 représente schématiquement, dans le plan vertical, un aéronef se présentant à l'atterrissage au seuil d'une piste, guidé par un ILS et montre différents paramètres pris en compte pour l'affichage du symbole d'axe de piste,
- une figure 3 représente schématiquement, dans le plan vertical, un aéronef se présentant au décollage au seuil d'une piste équipée d'un ILS,
- une figure 4 représente schématiquement, en plan horizontal, un aéronef se présentant par rapport à une piste pourvue en bout d'un émetteur de contrôle d'alignement axial d'ILS et montre différents paramètres pris en compte pour l'affichage du symbole d'axe de piste, et
- une figure 5 est un schéma illustrant l'architecture générale d'un dispositif de mise en oeuvre de l'invention à bord d'un aéronef.

Pour faciliter la description, on appellera ci-après l'émetteur ou le récepteur de contrôle d'alignement axial de l'ILS par leur désignation anglo-saxonne de "Localizer" et l'émetteur ou le récepteur de contrôle de pente d'approche de l'ILS par leur désignation anglo-saxonne de "Glide".

On distingue sur la figure 1 une ligne continue horizontale 1 qui matérialise la ligne d'horizon donnée par la centrale à inertie de l'aéronef et qui est habituellement graduée en échelle de cap. Le dispositif selon l'invention trace vers le bas de l'écran du collimateur, à partir d'un point F de la ligne d'horizon inertiel 1 et selon un angle $\phi P$, un symbole d'axe de piste formé d'une ligne de pointillés 2 qui se superpose à l'axe radioélectrique d'alignement Localizer de l'ILS suivi par le pilote lors des phases d'approche finale, d'atterrissage, de roulage ou de décollage, sans décrochement lors du passage d'une phase d'approche en vol à une phase de roulage au sol lors d'un atterrissage.

Le point F situé sur la ligne d'horizon, à l'origine du symbole d'axe de piste 2 est placé sur l'échelle de cap au point représentant la route de consigne (COURSEL). Celui-ci est le cap donné par le récepteur Localizer de l'ILS. Il est très proche ou identique au cap piste pour les pistes ouvertes aux approches par mauvaise visibilité.

L'orientation du symbole d'axe de piste sous la ligne d'horizon inertiel, c'est à dire l'angle $\phi P$ qu'il fait avec cette dernière est calculée en fonction des indications de positionnement données par les récepteurs Glide et Localizer de l'ILS, par la radiosonde altimétrique et par des appareils de mesure du cap magnétique et de la vitesse par rapport au sol, en tenant compte de la parallaxe due à la position décentrée du pilote dans la cabine de l'aéronef.

Le symbole d'axe de piste est affiché en vol dès le franchissement du seuil de la piste comme au sol pendant le roulage sans discontinuité grâce à un algorithme de calcul qui prend en compte la géométrie d'implantation sur la piste des émetteurs Glide et Localizer de l'ILS ou une estimation forfaitaire de celle-ci et qui est adapté aux spécificités des manoeuvres d'atterrissage et de décollage. En effet, les paramètres comme l'écart Glide ILS (GSDEV) et la hauteur radiosonde (ALTRA) ne sont pas toujours valides ou sont entachés d'erreurs ou biais dans certaines parties du domaine d'utilisation.

L'algorithme d'affichage du symbole d'axe de piste réalise les tâches suivantes :

- calcul de la distance initiale ($X_{AL0}$) séparant l'aéronef, ou plus exactement l'antenne de son récepteur Localizer de l'ILS, de l'antenne de l'émetteur Localizer de l'ILS situé au sol en bout de piste,
- calcul de la distance courante ($X_{AL}$) entre l'antenne du récepteur Localizer de l'ILS à bord de l'aéronef et l'antenne de l'émetteur Localizer de l'ILS au sol par intégration de la vitesse sol de l'aéronef,
- calcul des cotes transversale et verticale de l'emplacement de l'oeil du pilote relativement à l'axe d'alignement radioélectrique Localizer ILS, et
- calcul de l'angle $\phi P$.

Le calcul repose sur les conventions suivantes :

- Les paramètres d'entrée qui sont des valeurs angulaires sont exprimés en degrés.
- Tous les petits angles sont assimilés à leurs fonctions trigonométriques (sinus ou tangente) quand ils sont exprimés en radians.
- Les distances, longueurs et hauteurs sont exprimées en pieds (feet).

La distance $X_{AL}$ séparant l'antenne (LOCAN) du récepteur Localizer à bord de l'aéronef, de l'antenne (L) de l'émetteur Localizer au sol en bout de piste est évaluée par rapport à l'antenne (L) de l'émetteur Localizer selon l'axe de la piste orienté positivement dans le sens de l'atterrissage ou du décollage (émetteur Localizer devant l'aéronef) de sorte que sa cote est négative à l'initialisation.

La figure 2 illustre le principe de calcul de la distance initiale $X_{ALO}$ dans le cas de l'aéronef en approche. On distingue sur cette figure, qui est une coupe verticale où les échelles ne sont pas respectées, une piste 10 représentée par un double trait hachuré, de longueur RWYLEN, avec, à son extrémité droite, au point L, l'antenne d'un émetteur Localizer d'ILS, et, à son extrémité gauche, en approche, guidé par le Glide de l'ILS, un avion 11. Cet avion 11, vu en coupe verticale longitudinale, présente un centre de gravité CG à l'aplomb de ses ailes, où est localisé le référentiel avion, un train d'atterrissage principal 12 et un train d'atterrissage avant 13 entre lesquels sont disposées une antenne LOCAN de réception Localizer de l'ILS et une antenne GSAN de réception Glide de l'ILS. Dans le poste de pilotage 14 un point ON repère la position de l'oeil du pilote. Cet avion se présente au seuil de piste dans le faisceau Glide de l'ILS avec une assiette longitudinale positive repérée par un angle PITANG. A l'instant t=o où l'avion passe le seuil de la piste les roues de son train d'atterrissage principal sont à une hauteur ALTRA égale à une valeur de seuil RATHRES de l'ordre de 17 m (50 pieds) tandis que l'antenne GSAN de son récepteur Glide d'ILS est dans le faisceau Glide de l'ILS, l'écart Glide (GSDEV) étant supposé négligeable. Ce n'est pas une limitation car dans le cas contraire l'ILS émet une alarme demandant une interruption de l'atterrissage et une remise des gaz.

La hauteur de l'aéronef par rapport au sol est donnée par une sonde radio-altimétrique dont la mesure (ALTRA) est compensée pour donner la hauteur des roues du train principal d'atterrissage au-dessus du sol.

L'écartométrie Glide de l'ILS est mesurée par rapport à l'antenne (GSAN) du récepteur Glide dont les cotes ($X_{GSAN}$, ($Y_{GSAN}=0$), $Z_{GSAN}$) sont connues dans le repère avion.

La distance initiale $X_{AL0}$ se calcule, comme on peut le voir sur la figure 2, en ajoutant à la longueur de piste - RWYLEN la distance horizontale séparant l'antenne (LOCAN) du récepteur Localizer, du point nominal Glide d'interception de la piste comptée négativement qui se décompose en deux facteurs.

Le premier facteur :

$$\frac{(RATHRES + (Z_{GSAN} - Z_{LDG}) + (X_{GSAN} - X_{LDG}) \times PITCH_0 \times K)}{0.05235}$$

met en oeuvre la valeur de seuil de hauteur au-dessus de la piste RATHRES, la différence de hauteur à bord de l'avion $(Z_{GSAN} - Z_{LDG})$ entre l'antenne GSAN du récepteur Glide de l'ILS et le train principal d'atterrissage et un terme correctif de cette différence de hauteur tenant compte de la distance longitudinale $(X_{GSAN} - X_{LDG})$ séparant dans l'avion l'antenne GSAN du train principal d'atterrissage et de l'assiette longitudinale non nulle $PITCH_0$ de l'avion. Il correspond à la distance horizontale séparant l'antenne LOCAN du récepteur Localizer, du point nominal Glide d'interception, compte tenu de l'assiette longitudinale de l'aéronef. Le terme 0:05235 radian correspond pour sa part à la pente nominale d'un Glide d'ILS soit 3°.

Le deuxième facteur $-(X_{GSAN} - X_{LOCAN})$ correspond au décalage longitudinal sur l'aéronef des antennes des récepteurs Glide et Localizer de l'ILS.

L'expression générale de définition de la distance initiale $X_{AL0}$ est, compte tenu de ces deux facteurs de correction de la forme :

$$X_{AL0} = -RWYLEN - \frac{(RATHRES + (Z_{GSAN} - Z_{LDG}) + (X_{GSAN} - X_{LDG}) \times PITCH_0 \times K)}{0,05235}$$

$$+ X_{LOCAN} - X_{GSAN} \tag{1}$$

La figure 3 illustre le principe de détermination de la distance initiale $X_{AL0}$ dans le cas d'un aéronef au décollage. On distingue dans cette figure 3 un avion 20 à l'extrémité gauche d'une piste 21 équipée, à son extrémité droite, en un point L, d'une antenne d'un émetteur Localizer d'ILS.

Dans ce cas la hauteur radiosonde ALTRA est nulle et l'avion se situe, lorsqu'il est prêt au décollage, près de l'extrémité de la piste la plus éloignée de l'émetteur Localizer ILS. Seul le Localizer est utilisé pour un guidage latéral sur la piste. La distance initiale $X_{AL0}$ séparant l'antenne LOCAN du récepteur Localizer à bord, de l'antenne (L) de l'émetteur Localizer au sol est estimée à une valeur forfaitaire - TOGADIST représentative de la longueur de piste utilisée.

$$X_{AL0} = - TOGADIST \tag{2}$$

En vol comme au sol, la distance $X_{AL}$ s'estime en réactualisant la distance $X_{AL0}$, à l'aide d'un terme correctif obtenu par intégration de la vitesse au sol de l'aéronef SPDGND.

$$X_{AL} = X_{AL0} + \int_0^t SPDGND \times dt \tag{3}$$

La figure 4 illustre le principe de la détermination de la position de l'oeil du pilote de l'aéronef en latéral par rapport à l'axe d'alignement radioélectrique Localizer ILS. On distingue sur cette figure, qui est une vue de dessus où les échelles ne sont pas respectées, un axe de piste 30 présentant à son extrémité droite, au point L, une antenne d'émetteur Localizer d'ILS. Un avion 31, dont la pointe avant avec la cabine de pilotage est rappelée par des lignes de pointillés, est positionné sur cette piste. Il comporte un axe longitudinal $X_{AV}$ passant par son centre de gravité CG sur lequel a été repérée la position de l'antenne LOCAN du récepteur Localizer de l'ILS. Le pilote regardant au travers du collimateur est supposé occuper la place de gauche du poste de pilotage, ses yeux étant au niveau du point ON. L'avion est déporté latéralement par rapport à l'axe radioélectrique d'alignement Localizer ILS et désaxé. Son axe longitudinal $X_{AV}$ fait avec la direction de l'axe Localizer ILS un angle d'erreur de cap égal à la différence entre le cap magnétique de l'avion HDGMG et le cap de l'axe d'alignement COURSEL.

L'écart latéral $Y_{AH}$ de la position de l'antenne LOCAN du récepteur Localizer par rapport à l'axe d'alignement Localizer ILS est donné par la distance $X_{AL}$ de l'avion à l'émetteur Localizer ILS multiplié par la tangente de l'angle de déviation LOCRAD donné par le récepteur Localizer :

$$Y_{AH} = X_{AL} \times LOCRAD$$

Pour déduire la cote $Y_{ON}$ de l'oeil du pilote en latéral par rapport à l'axe d'alignement Localizer ILS, on corrige cet écart latéral $Y_{AH}$ avec deux termes correctifs. Le premier terme correctif tient compte de la distance longitudinale dans l'avion existant entre la position de l'antenne LOCAN du récepteur Localizer de l'ILS et celle du pilote compte tenu de l'erreur d'orientation de l'avion par rapport à la direction de l'axe d'alignement Localizer ILS

$$(X_{LOCAN} - X_{PE}) \times (COURSEL - HDGMG) \times K$$

$X_{LOCAN}$ étant la distance longitudinale, dans l'avion, de l'antenne LOCAN au centre de gravité CG de l'avion choisi pour origine du référentiel avion et $X_{PE}$ étant la distance longitudinale, dans l'avion, de la position du pilote au centre de gravité CG de l'avion. Le deuxième terme correctif tient compte de l'écart latéral $Y_{PE}$ de la position du pilote par rapport à l'axe longitudinal de l'avion. Il en résulte que la cote $Y_{ON}$ de l'oeil du pilote en latéral par rapport à l'axe d'alignement Localizer ILS s'exprime par la relation :

$$Y_{ON} = X_{AL} \times LOCRAD + (X_{LOCAN} - X_{PE}) \times (COURSEL - HDGMG) \times K + Y_{PE} \qquad (4)$$

La cote de l'oeil du pilote en vertical par rapport à la piste est calculée en supposant que l'angle de gîte de l'avion est négligeable ou nul. Elle est égale à la hauteur du train principal d'atterrissage au-dessus de la piste ALTRA donnée par la radiosonde altimétrique corrigée par deux termes. Un premier terme correcteur prend en compte l'écart de hauteur dû à la distance longitudinale existant entre la position du pilote et celle du train principal d'atterrissage et à l'assiette longitudinale positive de l'avion :

$$(X_{PE} - X_{LDG}) \times PITANG \times K$$

Un deuxième terme correcteur $(Z_{PE} - Z_{LDG})$ tient compte de la différence de hauteur dans l'avion, entre l'oeil du pilote et les roues du train principal d'atterrissage. Il en résulte que la cote $Z_{ON}$ de l'oeil du pilote en vertical par rapport à la piste s'exprime par la relation :

$$Z_{ON} = ALTRA + (X_{PE} - X_{LDG}) \times PITANG \times K + (Z_{PE} - Z_{LDG}) \qquad (5)$$

Pour le tracé graphique du réticule d'axe de piste, le calcul de l'angle $\phi$P tient compte, en plus de l'effet de parallaxe visuelle, d'un décalage d'origine des angles dû au fait que l'axe de la piste est représenté sous la référence d'horizon et perpendiculaire à celle-ci lorsque l'avion est correctement positionné et orienté par rapport à l'axe radioélectrique d'alignement du Localizer ILS.

$$\phi P = -\arctan\left(\frac{Y_{ON}}{Z_{ON}}\right) \times K - 90° \qquad (6)$$

L'axe de piste ainsi tracé sur le collimateur sert essentiellement, en condition de mauvaise visibilité, à contrôler la qualité d'une approche automatique et à effectuer directement, au palonnier, la tenue d'axe de piste lors des phases de roulage au décollage et à l'atterrissage. Car il restitue, sous une forme très intuitive, les informations nécessaires et suffisantes pour piloter, d'orientation et d'écart de position de l'avion par rapport à l'axe radioélectrique d'alignement Localizer ILS, lui-même très proche ou confondu avec l'axe de la piste.

La figure 5 illustre l'architecture générale d'un équipement installé à bord d'un avion pour afficher devant les yeux du pilote ce symbole d'axe de piste lors d'une phase d'atterrissage, depuis le passage de l'avion au seuil de la piste, jusqu'à son toucher de roues et son roulage sur la piste, ainsi que lors d'une phase de décollage pendant son roulage sur la piste. L'avion, dont on distingue la partie avant avec le poste de pilotage, est équipé avec un système de navigation 40 et des récepteurs Glide et Localizer d'ILS 41, une optique semi-réfléchissante, ainsi que des dispositifs de projection de l'image 43 et de génération de la symbologie 44.

Les récepteurs Glide et Localizer d'ILS 41 sont reliés à des antennes GSAN et LOCAN disposées sous le ventre de l'avion.

Le système de navigation 40 fournit les indications habituelles dont, notamment, le cap magnétique, la vitesse relative par rapport au sol et l'altitude par rapport au sol.

Le dispositif de projection 43 vient afficher différents réticules relatifs au pilotage dont, en phase d'atterrissage ou de décollage, un axe de piste, sur un écran transparent 42 qui est placé devant les yeux du pilote, en superposition avec le paysage.

Le dispositif de projection 43 est piloté par un générateur de symboles 44 qui reçoit des commandes de mise à jour d'un calculateur 45 relié au système de navigation 40 et aux sorties des récepteurs Glide et Localizer 41 de l'ILS. Le calculateur 45 est un calculateur à logique programmée qui assure une mise à jour régulière des différents réticules et notamment de celui symbolisant un axe de piste. Il veille à ce que le réticule symbolisant un axe de piste soit affiché, à l'atterrissage, dés que l'avion se présente au seuil de piste et soit maintenu après le toucher de roues pendant le roulage sur la piste ainsi qu'au décollage pendant le roulage sur la piste. Il situe l'origine F de ce réticule symbolisant un axe de piste sur la ligne d'horizon en un point de cap correspondant au cap de piste donné par le récepteur Localizer de l'ILS et oriente la direction de la ligné de pointillés de ce réticule de manière qu'elle coïncide avec l'axe radioélectrique d'alignement Localizer ILS tel qu'il devrait être perçu par le pilote, cela en mettant en oeuvre des algorithmes réalisant les tâches suivantes :

- calcul de la distance initiale $X_{AL0}$ à l'atterrissage comme au décollage selon les relations (1 ) et (2),
- calcul de la distance courante $X_{AL}$ à chaque instant, par intégration de la vitesse sol de l'avion selon la relation (3),
- calcul des coordonnées à chaque instant, de l'emplacement de l'oeil du pilote $Y_{ON}$ et $Z_{ON}$ dans un plan horizontal et un plan vertical, relativement à l'axe radioélectrique d'alignement Localizer ILS selon les relations (4) et (5), et
- calcul de l'angle $\phi P$ à chaque instant selon la relation (6).

Bien entendu, l'invention n'est pas limitée à l'exemple décrit. Elle inclut notamment les variantes suivantes :

- autre graphisme pour le réticule d'axe de piste,
- prise en compte d'un cap de consigne autre que celui donné par l'ILS,
- prise en compte d'une pente de consigne variable, variable,
- prise en compte de paramètres de consigne fournis par un système de l'aéronef autre que celui dont fait partie le collimateur,
- initialisation en vol avant le seuil de piste nominal.

## Revendications

1. Dispositif optoélectronique d'aide au pilotage d'un aéronef qui est pourvu d'un collimateur, de récepteurs ILS de contrôle d'alignement axial et de contrôle de pente de descente en approche, et d'instruments de navigation donnant son cap ainsi que sa vitesse et son altitude par rapport au sol, et qui évolue au voisinage d'une piste d'atterrissage ou de décollage équipée d'un ILS, ledit dispositif comportant des moyens d'affichage, sur le collimateur, d'une ligne matérialisant l'axe de piste présenté au pilote en vol comme au sol, sans discontinuité entre les phases en vol d'approche finale au seuil de la piste et, au sol de roulage sur la piste, caractérisé en ce qu'il comporte des moyens pour situer l'origine de la ligne matérialisant l'axe de piste sur la ligne d'horizon graduée en échelle de cap, au point représentant la route de consigne coïncidant avec l'orientation de l'axe d'alignement donné par le récepteur d'alignement axial de l'ILS et des moyens pour orienter la ligne matérialisant l'axe de piste par rapport à la ligne d'horizon selon un angle $\phi P$ pris égal en degrés à :

$$\phi P = -\arctan\left(\frac{Y_{ON}}{Z_{ON}}\right) \times \frac{1}{K} - 90°$$

où $Y_{ON}$ et $Z_{ON}$ sont respectivement la position par rapport à l'axe d'alignement radioélectrique du récepteur d'alignement axial de l'ILS, en latéral et en vertical, de l'emplacement de l'oeil du pilote regardant au travers du collimateur, et K un coefficient de conversion d'angle de degrés en radians.

2. Dispositif selon la revendication 1, caractérisé en ce qu'il comporte des moyens de détermination de la position $Y_{ON}$, par rapport à l'axe d'alignement radioélectrique du récepteur d'alignement axial de l'ILS, en latéral, de l'emplacement de l'oeil du pilote regardant au travers du collimateur mettant en oeuvre la relation :

$$Y_{ON} = X_{AL} \times LOCRAD + (X_{LOCAN} - X_{PE}) \times (COURSEL - HDGMG) \times K + Y_{PE}$$

dans laquelle :

- $X_{AL}$ est la distance courante de l'antenne du récepteur de contrôle d'alignement axial de l'ILS à bord de l'aéronef par rapport à l'antenne de l'émetteur de contrôle d'alignement axial de l'ILS situé en bout de piste,
- LOCRAD est l'écart angulaire en radian détecté par le récepteur de contrôle d'alignement axial de l'ILS,
- $X_{LOCAN}$ est la cote longitudinale, dans l'aéronef, de l'antenne du récepteur de contrôle d'alignement axial de l'ILS,
- $X_{PE}$ est la cote longitudinale, dans l'aéronef, de l'emplacement de l'oeil du pilote,
- COURSEL est la route choisie, en degrés, c'est à dire l'axe radioélectrique de ILS,
- HDGMG est le cap magnétique, en degrés, de l'aéronef, et
- $Y_{PE}$ la cote transversale, dans l'aéronef, de l'emplacement de l'oeil du pilote

3. Dispositif selon la revendication 1, caractérisé en ce qu'il comporte des moyens de détermination de la position $Z_{ON}$, par rapport à la piste, en vertical, de l'emplacement de l'oeil du pilote regardant au travers du collimateur mettant en oeuvre la relation :

$$Z_{ON} = ALTRA + (X_{PE} - X_{LDG}) \times PITANG \times K + (Z_{PE} - Z_{LDG})$$

dans laquelle :

- ALTRA est la hauteur radiosonde compensée pour donner la hauteur par rapport au sol des roues du train principal d'atterrissage,
- $X_{PE}$ est la cote longitudinale, dans l'aéronef, de l'emplacement de l'oeil du pilote,
- $X_{LDG}$ est la cote longitudinale, dans l'aéronef, du train principal d'atterrissage,
- PITANG est l'angle d'assiette longitudinale de l'aéronef en degrés,
- $Z_{PE}$ est la cote verticale, dans l'aéronef, de l'emplacement de l'oeil du pilote, et
- $Z_{LDG}$ est la cote verticale, dans l'aéronef, des roues du train principal d'atterrissage.

4. Dispositif selon la revendication 2, caractérisé en ce qu'il comporte des moyens de détermination de la distance courante $X_{AL}$ de l'antenne du récepteur de contrôle d'alignement axial de l'ILS à bord de l'aéronef par rapport à l'antenne de l'émetteur de contrôle d'alignement axial de l'ILS situé en bout de piste mettant en oeuvre la relation :

$$X_{AL} = X_{AL0} + \int_{0}^{t} SPDGND \times dt$$

dans laquelle :

- SPDGND est la vitesse au sol de l'aéronef, et
- $X_{AL0}$ est la distance initiale entre l'antenne du récepteur de contrôle d'alignement axial de l'ILS à bord de l'aéronef par rapport à l'antenne de l'émetteur de contrôle d'alignement axial de l'ILS situé en bout de piste.

5. Dispositif selon la revendication 4, caractérisé en ce qu'il comporte des moyens de détermination, au cours d'une phase d'atterrissage, de la distance initiale $X_{AL0}$ entre l'antenne du récepteur de contrôle d'alignement axial de l'ILS à bord de l'aéronef par rapport à l'antenne de l'émetteur de contrôle d'alignement axial de l'ILS situé en bout de piste mettant en oeuvre la relation :

$$X_{AL0} = -RWYLEN - \frac{(RATHRES + (Z_{GSAN} - Z_{LDG}) + (X_{GSAN} - X_{LDG}) \times PITCH_0 \times K)}{0,05235}$$

$$+ X_{LOCAN} - X_{GSAN}$$

dans laquelle :

- RWYLEN est une longueur forfaitaire de piste à l'atterrissage représentant la distance au sol entre les émetteurs de contrôle de pente en approche et de contrôle d'alignement axial de l'ILS,
- RATHRES est la valeur de seuil de l'indication de hauteur du train d'atterrissage par rapport au sol donnée par la radiosonde pour laquelle on considère que l'aéronef est au seuil de la piste,
- $Z_{GSAN}$ est la cote verticale, dans l'aéronef, de l'antenne du récepteur de contrôle de pente d'approche de l'ILS,
- $Z_{LDG}$ est la cote verticale, dans l'aéronef, des roues du train principal d'atterrissage.
- $X_{GSAN}$ est la cote longitudinale, dans l'aéronef, de l'antenne du récepteur de contrôle de pente d'approche de l'ILS,
- $X_{LDG}$ est la cote longitudinale, dans l'aéronef, du train principal d'atterrissage,
- $PITCH_0$ est l'assiette longitudinale de l'aéronef lorsque ce dernier passe au seuil de piste, et
- $X_{LOCAN}$ est la cote longitudinale, dans l'aéronef, de l'antenne du récepteur de contrôle d'alignement axial de l'ILS.

## Patentansprüche

1. Optoelektronische Vorrichtung zur Unterstützung der Fluglagenregelung eines Luftfahrzeugs, die versehen ist mit einem Visier, ILS-Empfängern zur Kontrolle der axialen Ausrichtung und zur Kontrolle der Anflugneigung, und mit Navigationsinstrumenten, die den Kurs sowie die Geschwindigkeit und die Höhe in bezug auf den Boden angeben, und die in der Umgebung einer Lande- oder Startbahn, die mit einem ILS ausgerüstet ist, manövriert, wobei die Vorrichtung Mittel enthält, die auf dem Visier eine die Achse der Bahn darstellende Linie anzeigen, die dem Piloten im Flug wie auf dem Boden ohne Diskontinuität zwischen der Endanflugsphase an der Landebahnschwelle und der Rollphase auf der Bahn am Boden angezeigt wird, dadurch gekennzeichnet, daß sie Mittel, die den Ursprung der die Achse der Bahn darstellenden Linie auf der im Kursmaßstab unterteilten Horizontlinie an dem Punkt anordnen, der die Soll-Route darstellt, die mit der Orientierung der vom Axialausrichtempfänger des ILS angegebenen Ausrichtachse zusammenfällt, sowie Mittel enthält, die die Linie, die die Achse der Bahn darstellt, in bezug auf die Horizontlinie in einem Winkel φP orientiert, der in Grad gegeben ist durch:

$$\phi P = -\arctan\left(\frac{Y_{ON}}{Z_{ON}}\right) \times \frac{1}{K} - 90°$$

wobei $Y_{ON}$ und $Z_{ON}$ die Positionen des Ortes des Auges des durch das Visier blickenden Piloten in bezug auf die funkelektrische Ausrichtachse des Axialausrichtempfängers des ILS in seitlicher bzw. in vertikaler Richtung sind und K ein Koeffizient zur Umwandlung des Winkels von Grad in Radian ist.

2. Vorrichtung nach Anspruch 1, dadurch gekennzeichnet, daß sie Mittel zum Bestimmen der Position $Y_{ON}$ des Ortes des Auges des durch das Visier blickenden Piloten in bezug auf die funkelektrische Ausrichtachse des Axialausrichtempfängers des ILS in seitlicher Richtung enthält, die die folgende Beziehung verwenden:

$$Y_{ON} = X_{AL} \times LOCRAD + (X_{LOCAN} - X_{PE}) \times (COURSEL - HDGMG) \times K + Y_{PE}$$

worin:

- $X_{AL}$ der momentane Abstand der Antenne des Axialausrichtkontrollempfängers des ILS an Bord des Flugzeugs in bezug auf die Antenne des Axialausrichtkontrollsenders des ILS, der sich am Ende der Bahn befindet, ist,
- LOCRAD der Winkelabstand in Radian ist, der vom Axialausrichtkontrollempfänger des ILS erfaßt wird,
- $X_{LOCAN}$ die longitudinale Maßzahl des Ortes des Auges des Piloten im Flugzeug ist,

- COURSEL die gewählte Route in Grad, d. h. die funkelektrische Achse des ILS, ist,
- HDGMG der magnetische Kurs in Grad des Flugzeugs ist und
- $Y_{PE}$ die transversale Maßzahl des Ortes des Auges des Piloten im Flugzeug ist.

3. Vorrichtung nach Anspruch 1, dadurch gekennzeichnet, daß sie Mittel für die Bestimmung der Position $Z_{ON}$ des Ortes des Auges des durch das Visier blickenden Piloten in bezug auf die Bahn in vertikaler Richtung enthält, die die folgende Beziehung verwenden:

$$Z_{ON} = ALTRA + (X_{PE} - X_{LDG}) \times PITANG \times K + (Z_{PE} - Z_{LDG})$$

worin:

- ALTRA die kompensierte Funksondenhöhe ist, die die Höhe in bezug auf den Boden der Räder des Hauptfahrwerks angibt,
- $X_{PE}$ die longitudinale Maßzahl des Ortes des Auges des Piloten im Flugzeug ist,
- $X_{LDG}$ die longitudinale Maßzahl des Hauptfahrwerks im Flugzeug ist,
- PITANG der longitudinale Trimmwinkel des Flugzeugs in Grad ist,
- $Z_{PE}$ die vertikale Maßzahl des Ortes des Auges des Piloten im Flugzeug ist und
- $Z_{LDG}$ die vertikale Maßzahl der Räder des Hauptfahrwerks im Flugzeug ist.

4. Vorrichtung nach Anspruch 2, dadurch gekennzeichnet, daß sie Mittel für die Bestimmung des momentanen Abstandes $X_{AL}$ der Antenne des Axialausrichtkontrollempfängers des ILS an Bord des Flugzeugs in bezug auf die Antenne des Axialausrichtkontrollsenders des ILS, der sich am Ende der Bahn befindet, enthält, die die folgende Beziehung verwenden:

$$X_{AL} = X_{AL0} + \int_0^t SPDGND \times dt$$

worin:

- SPDGND die Geschwindigkeit des Flugzeugs am Boden ist und
- $X_{AL0}$ der Anfangsabstand zwischen der Antenne des Axialausrichtkontrollempfängers des ILS an Bord des Flugzeugs in bezug auf die Antenne des Axialausrichtkontrollsenders des ILS, der sich am Ende der Bahn befindet, ist.

5. Vorrichtung nach Anspruch 4, dadurch gekennzeichnet, daß sie Mittel enthält, die während einer Landephase den Anfangsabstand $X_{AL0}$ zwischen der Antenne des Axialausrichtkontrollempfängers des ILS an Bord des Flugzeugs in bezug auf die Antenne des Axialausrichtkontrollsenders des ILS, der sich am Ende der Bahn befindet, bestimmen und dabei die folgende Beziehung verwenden:

$$X_{AL0} = RWYLEN - \frac{(RATHRES + (Z_{GSAN} - Z_{LDG}) + (X_{GSAN} - X_{LDG}) \times PITCH_0 \times K}{0{,}05235} + X_{LOCAN} - X_{GSAN}$$

worin:

- RWYLEN eine Pauschallänge der Landebahn ist, die den Abstand am Boden zwischen den Anflugneigungskontrollsendern und Axialausrichtkontrollsendern des ILS darstellen,
- RATHRES der Schwellenwert der Höhenangabe des Fahrwerks in bezug auf den Boden ist, der durch die Funksonde angegeben wird und bei dem angenommen wird, daß sich das Flugzeug an der Landebahnschwelle befindet,
- $Z_{GSAN}$ die vertikale Maßzahl der Antenne des Landeneigungskontrollempfängers des ILS im Flugzeug ist,
- $Z_{LDG}$ die vertikale Maßzahl der Räder des Hauptfahrwerks im Flugzeug ist,
- $X_{GSAN}$ die longitudinale Maßzahl der Antenne des Landeneigungskontrollempfängers des ILS im Flugzeug ist,

- $X_{LDG}$ die longitudinale Maßzahl des Hauptfahrwerks im Flugzeug ist,
- $PITCH_0$ die longitudinale Trimmung des Flugzeugs ist, wenn dieses letztere die Landebahnschwelle überquert, und
- $X_{LOCAN}$ die longitudinale Maßzahl der Antenne des Axialausrichtkontrollempfängers des ILS im Flugzeug ist.

**Claims**

1. Optoelectronic device for assistance in the piloting of an aircraft that is provided with a collimator, ILS axial alignment control and glide slope receivers and navigation instruments giving its heading as well as its speed and altitude with respect to the ground, where said aircraft is manoeuvring in the neighbourhood of a landing runway or take-off runway equipped with an ILS, said device comprising means for the display, on the collimator, of a line representing the runway centreline shown to the pilot in flight as well as on the ground, without any break between the phases of final approach flight to the runway threshold and ground taxiing on the runway, characterized in that said device comprises means to locate the origin of the line representing the runway centreline on the horizon line graduated in a heading scale, at the point representing the set course coinciding with the orientation of the alignment axis given by the ILS axial alignment receiver and means to orient the line representing the runway centreline with respect to the horizon line at an angle φP taken as being equal in degrees to:

$$\phi P = - \arctan\left(\frac{Y_{ON}}{Y_{ON}}\right) \times \frac{1}{K} - 90 \circ$$

where $Y_{ON}$ and $Z_{ON}$ are respectively the position, with respect to the axis of radio alignment of the ILS axial alignment receiver, laterally and vertically, of the location of the pilot's eye looking through the collimator, and K a coefficient of conversion of angles from degrees into radians.

2. Device according to Claim 1, characterized in that it comprises means to determine the position $Y_{ON}$, laterally with respect to the axis of radio alignment of the ILS axial alignment receiver, of the location of the pilot's eye looking through the collimator implementing the relationship:

$$Y_{ON}=X_{AL}\times LOCRAD+(X_{LOCAN}-X_{PE})\times(COURSEL-HDGMG)\times K+Y_{PE}$$

in which:

$X_{AL}$ is the current distance between the antenna of the ILS axial alignment control receiver on board the aircraft and the antenna of the ILS axial alignment control transmitter located at the end of the runway,
LOCRAD is the angular deviation in radians detected by the ILS axial alignment control receiver,
$X_{LOCAN}$ is the longitudinal coordinator, in the aircraft, of the antenna of the ILS axial alignment control receiver,
$X_{PE}$ is the longitudinal coordinate, in the aircraft, of the location of the pilot's eye,
COURSEL is the chosen course, in degrees, namely the ILS radio axis,
HDGMG is the magnetic heading, in degrees, of the aircraft, and
$Y_{PE}$ is the transverse coordinate, in the aircraft, of the location of the pilot's eye.

3. Device according to Claim 1, characterized in that it comprises means to determine the position $Z_{ON}$, with respect to the runway, vertically, of the location of the pilot's eye looking through the collimator, implementing the relationship:

$$Z_{ON}=ALTRA+(X_{PE}-X_{LDG})\times PITANG\times K+(Z_{PE}-Z_{LDG})$$

in which:

ALTRA is the radioprobe height with compensation to give the height with respect to the ground of the wheels of the main landing gear,

$X_{PE}$     is the longitudinal coordinate, in the acircraft, of the location of the pilot's eye,

$X_{LDG}$     is the longitudinal coordinate, in the aircraft, of the main landing gear,

PITANG     is the longitudinal pitch angle of the aircraft in degrees,

$Z_{PE}$     is the vertical coordinate, in the aircraft, of the location of the pilot's eye, and

$Z_{LDG}$     is the vertical coordinate, in the aircraft, of the wheels of the main landing gear.

4. Device according to Claim 2, characterized in that it comprises means to determine the current distance $X_{AL}$ between the antenna of the ILS axial alignment control receiver on board the aircraft and the antenna of the ILS axial alignment control transmitter located at the end of the runway, implementing the relationship:

$$X_{AL} \; = \; X_{ALO} \; + \; \int_0^t \; SPDGND \times dt$$

in which:

SPDGND   is the ground speed of the aircraft, and

$X_{ALO}$     is the initial distance between the antenna of the ILS axial alignment receiver on board the aircraft and the antenna of the ILS axial alignment transmitter located at the end of the runway.

5. Device according to claim 4, characterized in that it comprises means for the determining, during a landing phase, the initial distance XALO between the antenna of the ILS axial alignment receiver on board the aircraft and the antenna of the ILS axial alignment transmitter located at the end of the runway, implementing the relationship:

$$X_{ALO} = \frac{-RWYLEN - (RATHRES + (Z_{GSAN} - Z_{LDG}) + (X_{GSAN} - X_{LDG}) \times PITCH_0 \times K)}{0.05235}$$
$$+ X_{LOCAN} - X_{GSAN}$$

in which:

RWYLEN   is an assumed, a priori length of runway at landing representing the distance on the ground between the ILS axial alignment and glide slope transmitters

RATHRES is the threshold value of the indication of height of the landing gear with respect to the ground, given by the radioprobe for which it is considered that the aircraft is at the runway threshold.

$Z_{GSAN}$     is the vertical coordinate, in the aircraft, of the antenna of the ILS glide slope receiver.

$Z_{LDG}$     is the vertical coordinate, in the aircraft, of the wheels of the main landing gear,

$X_{GSAN}$     is the longitudinal coordinate, in the aircraft, of the antenna of the ILS glide slope control receiver.

$X_{LDG}$     is the longitudinal coordinate, in the aircraft, of the main landing gear.

$PITCH_0$     is the longitudinal pitch of the aircraft when it passes the runway threshold, and

$X_{LOCAN}$     is the longitudinal coordinate, in the aircraft, of the antenna of the ILS axial alignment receiver.

FIG.1

FIG.3

FIG.2

FIG.4

FIG.5